# FASCICULE DE BREVET EUROPEEN

(11) **EP 2 714 281 B1**
(45) Date de publication et mention de la délivrance du brevet: **13.05.2015**
(21) Numéro de dépôt: 12731527.3
(22) Date de dépôt: 21.05.2012
(51) Int. Cl.: B05B 11/00, B65D 83/22, B65D 83/16

(54) **ORGANE DE FIXATION ET DISTRIBUTEUR COMPRENANT UN TEL ORGANE**
BEFESTIGUNGSELEMENT UND SPENDER MIT EINEM SOLCHEN KÖRPER
FIXING ELEMENT AND DISPENSER COMPRISING SUCH A BODY

(30) Priorité: 23.05.2011 FR 1154460
(43) Date de publication de la demande: 09.04.2014
(73) Titulaire: Aptar France SAS, 27110 Le Neubourg (FR)
(72) Inventeur: MICHAUX, Sébastien, F-76320 Caudebec Les Elbeuf (FR); STUART, Bruno, F-27350 Hauville (FR)
(74) Mandataire: CAPRI
(86) Numéro de dépôt international: PCT/FR2012/051128
(87) Numéro de publication internationale: WO 2012/160303

(56) Documents cités:
- EP-A1- 0 909 719
- EP-A1- 2 135 682
- WO-A1-2011/015760

## Description

La présente invention concerne un organe de fixation, tel qu'une frette d'habillage, destiné à être engagé autour d'un col d'un réservoir. L'organe de fixation comprend des moyens d'accrochage qui peuvent être engagés axialement autour du col jusqu'en position finale de montage dans laquelle l'organe est fermement, et avantageusement définitivement, accroché autour du col. Les domaines d'application privilégiés de la présente invention sont ceux de la parfumerie, de la cosmétique ou encore de la pharmacie.

Dans l'art antérieur, on connaît depuis longtemps les organes de fixation comprenant une bague en prise autour du col et une frette de verrouillage engagée autour de la bague pour la verrouiller sur le col. On peut citer les documents WO2011/015760 et EP2135682 qui décrivent des organes de fixation de ce type.

Le document EP 0 909 719 A1 décrit un organe de fixation selon le préambule de la revendication 1.

Dans l'art antérieur, il existe aussi des distributeurs de produit cosmétique ou de parfum qui comprennent un réservoir de produit fluide définissant un col, un organe de distribution tel qu'une pompe ou une valve, monté dans le col du réservoir, et un organe de fixation, tel qu'une frette d'habillage engagée autour du col du réservoir. La pompe ou la valve peut par exemple être montée de manière fixe, étanche et de préférence définitive, dans le col du réservoir au moyen d'une bague de montage qui vient en prise avec le col du réservoir. La bague de montage peut par exemple être une bague à sertir qui est sertie à la fois autour de la pompe ou de la valve et autour du col du réservoir. La bague à sertir épouse de manière sensiblement fidèle la forme extérieure du col du réservoir, qui peut par exemple être réalisée avec un renfort périphérique annulaire. Dans ce cas, la bague à sertir comprend une partie qui est rabattue sous le renfort périphérique annulaire de manière à former un épaulement orienté vers le bas.

Dans ce contexte, l'organe de fixation, qui est une frette d'habillage, est engagé autour du col du réservoir en venant en contact direct avec la bague à sertir. Il n'y a donc pas de contact direct entre la frette d'habillage et le col du réservoir, étant donné que celui-ci est recouvert par la bague à sertir. La frette d'habillage comprend des moyens d'accrochage, qui en position finale d'accrochage, viennent en prise sous l'épaulement formé par le renfort annulaire et la bague à sertir. En d'autres termes, les moyens d'accrochage de la frette d'habillage viennent s'encliqueter sous l'épaulement de la bague à sertir. On réalise ainsi une fixation ferme et définitive de la frette d'habillage autour du col du réservoir. La frette d'habillage peut remplir une fonction purement esthétique, mais également techniques en guidant axialement le poussoir lors de son montage sur la pompe/valve et une fois monté sur la pompe/valve, ou encore en empêchant le retrait du poussoir. La frette d'habillage peut encore remplir d'autres fonctions techniques.

Dans ce contexte, il n'est pas toujours aisé d'amener l'organe de fixation (frette d'habillage) sur le col du réservoir de manière à engager les moyens d'accrochage autour du col pour venir en prise sous l'épaulement formé par la bague de montage. La difficulté est d'autant plus grande que l'organe de fixation présente un diamètre important, souvent en correspondance avec la taille du réservoir. En effet, lorsque l'organe de fixation est volumineux, son centrage axial sur le col du réservoir est rendu difficile, du fait de la faible visibilité. De ce fait, l'opération d'accrochage de l'organe de fixation sur le réservoir nécessite un temps important et une manipulation délicate. Très souvent, cette opération est réalisée manuellement.

La présente invention a pour but de remédier aux inconvénients précités de l'art antérieur en définissant un organe de fixation dont l'engagement des moyens d'accrochage en prise avec et autour du col est facilité de manière à accélérer l'opération de montage. L'organe de fixation s'applique plus particulièrement, mais non exclusivement, au distributeur dont l'organe de distribution est monté sur le réservoir au moyen d'une bague de montage, par exemple de type bague à sertir.

Pour ce faire, la présente invention prévoit un organe de fixation destiné à être engagé autour d'un col d'un réservoir, l'organe de fixation comprenant des moyens d'accrochage engageables axialement en prise avec et autour du col jusqu'en position finale d'accrochage dans laquelle l'organe est fermement accroché autour du col, caractérisé en ce qu'il comprend en outre des moyens de guidage engageables axialement autour du col avant que les moyens d'accrochage ne s'engagent autour du col pour faciliter le positionnement de l'organe de fixation et/ou des moyens d'accrochage par rapport au col. Ainsi, les moyens de guidage servent à centrer l'organe de fixation par rapport au col du réservoir en venant en prise autour du col avant que les moyens d'accrochage ne s'engagent autour du col. Pour ce faire, les moyens de guidage s'étendent axialement en dessous des moyens d'accrochage. L'engagement des moyens de guidage et des moyens d'accrochage autour du col s'effectue donc séquentiellement : les moyens de guidage s'engagent en premier autour du col, suivis par les moyens d'accrochage. Les moyens d'accrochage assurent à eux seuls la fixation de l'organe de fixation sur le col du réservoir : les moyens de guidage peuvent néanmoins participer à la fixation sur le col.

Selon une caractéristique très intéressante de la présente invention, les moyens de guidage sont déformés en position finale d'accrochage contre le réservoir. Ainsi, les moyens de guidage n'empêchent pas les moyens d'accrochage d'atteindre leur position finale d'accrochage. A partir du moment où les moyens de guidage ont rempli leur fonction de positionnement axiale des moyens d'accrochage autour du col, ils peuvent s'escamoter en se déformant, par exemple contre le réservoir. Il n'est pas exclu que la déformation des moyens de guidage participent également à l'accrochage de l'organe de fixation autour du col.

Les moyens de guidage comprennent plusieurs pattes déformables qui s'étendent librement radialement vers l'intérieur en direction du col. Avantageusement, chaque patte comprend une lame radiale et une bride axiale engageable autour du col. La déformation de la patte peut se faire au niveau de la lame radiale, par exemple à l'endroit où elle se raccorde au reste de l'organe de fixation.

Selon un autre aspect pratique, les moyens d'accrochage comprennent plusieurs segments d'accrochage rigides engageables en prise avec et autour du col. Avantageusement, chaque segment d'accrochage comprend un plateau radial et une jupe axiale engageable autour du col. Avantageusement, au moins un des segments est pourvu d'un profil d'accrochage adapté à venir en prise sous un épaulement formé autour du col. Il est à noter que l'épaulement n'est pas forcément formé par le col : en effet, il peut également être formé par une bague de montage en prise autour du col.

Ainsi, les moyens de guidage et les moyens d'accrochage présentent une configuration globale sensiblement similaire, hormis que les segments d'accrochage sont rigides alors que les pattes déformables sont flexibles. On peut par exemple prévoir trois segments d'accrochage séparés par trois pattes déformables de guidage. Les brides axiales des pattes sont orientées vers le bas alors que les jupes axiales des segments d'accrochage sont orientées de manière opposée vers le haut.

Selon un autre aspect pratique de la présente invention, l'organe de fixation comprend une douille externe, les moyens de guidage comprenant plusieurs pattes déformables qui s'étendent librement à partir de la douille radialement vers l'intérieur en direction du col, les moyens d'accrochage comprenant plusieurs segments d'accrochage rigides qui s'étendent librement à partir de la douille radialement vers l'intérieur en direction du col. Les pattes déformables et les segments d'accrochage rigides peuvent être disposés de manière alternée. Les pattes déformables peuvent comprendre des brides axiales orientées vers le bas alors que les segments d'accrochage peuvent comprendre des jupes axiales orientées vers le haut.

L'invention définit également un distributeur de produit fluide comprenant un réservoir de produit fluide définissant un col, un organe de distribution, tel qu'une pompe ou une valve, monté dans le col du réservoir, et un organe de fixation, tel que défini ci-dessus, engagé autour du col du réservoir. Avantageusement, le distributeur comprend en outre une bague de montage pour monter l'organe de distribution dans le col, l'organe de fixation venant en prise avec la bague de montage. De préférence, la bague de montage forme un épaulement de bague sous lequel les moyens d'accrochage sont logés, les moyens de guidage étant déformés contre le réservoir en position finale d'accrochage. Il s'agit là de la forme d'application privilégiée de la présente invention.

En variante, l'organe de fixation vient directement en prise avec le col du réservoir, le col formant un épaulement de col sous lequel les moyens d'accrochage sont logés, les moyens de guidage étant déformés contre le réservoir en position finale d'accrochage. Dans ce cas, l'organe de fixation peut intégrer des moyens de montage permettant de monter l'organe de distribution dans le col du réservoir.

L'esprit de l'invention est de pourvoir l'organe de fixation de moyens de guidage permettant de faciliter le positionnement des moyens d'accrochage par rapport au col du réservoir, l'invention étant definié par les revendications.

Une caractéristique très intéressante réside dans le fait que les moyens de guidage sont déformables et déformés, avantageusement contre le réservoir, lorsque les moyens d'accrochage ont atteint leur position finale d'accrochage autour du col. L'escamotage ou l'effacement des moyens de guidage une fois qu'ils ont rempli leur fonction est une caractéristique avantageuse, car elle permet aux moyens d'accrochage de remplir leur fonction d'accrochage sans être gênés par les moyens de guidage.

L'invention sera maintenant plus amplement décrite, en référence aux dessins joints, donnant à titre d'exemple non limitatif un mode de réalisation de l'invention.

Sur les figures :
La figure 1 est une vue en perspective éclatée d'un distributeur réalisé conformément à l'invention,
Les figures 2a et 2b sont des vues agrandies en perspective, respectivement de dessous et de dessus de l'organe de fixation réalisé selon une forme de réalisation non limitative de l'invention,
La figure 3a est une vue en plan du distributeur en cours de montage avec les moyens de guidage engagés autour du col du réservoir,
La figure 3b est une vue en coupe transversale similaire à celle de la figure 3a,
La figure 3c est une vue agrandie d'un détail de la figure 3b, et
Les figures 4a, 4b et 4c sont des vues respectivement similaires aux figures 3a, 3b et 3c pour le distributeur en position finale d'accrochage.

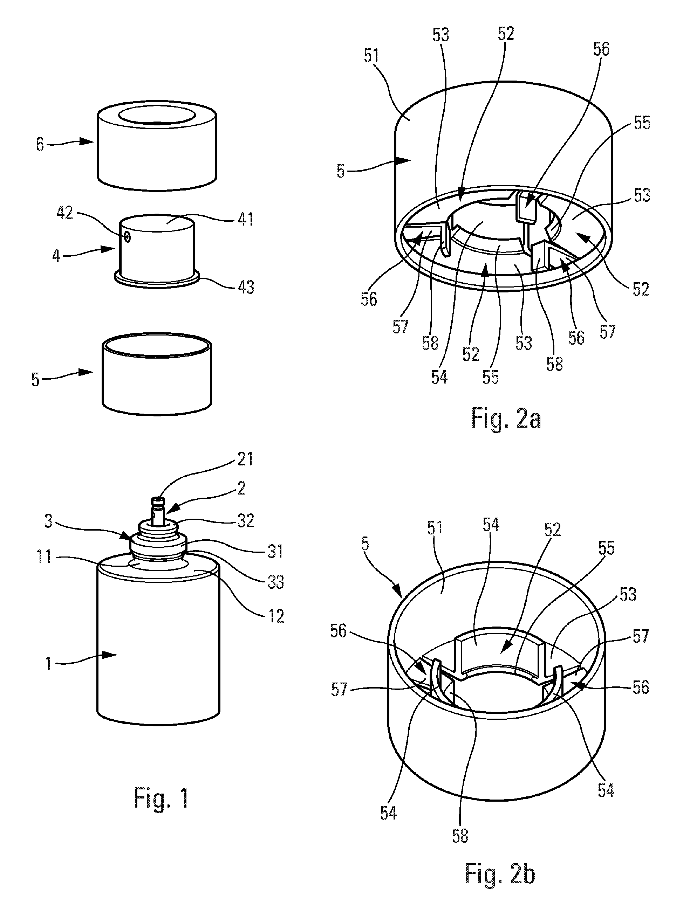

On se référera tout d'abord à la figure 1 pour décrire de manière générale les différents éléments constitutifs d'un distributeur de produit fluide réalisé selon l'invention. Le distributeur comprend six éléments constitutifs, à savoir un réservoir de produit fluide 1, un organe de distribution 2, une bague de montage 3, un poussoir 4, un organe de fixation 5 et une enveloppe d'habillage 6.

Le réservoir de produit fluide 1 forme un col 11 qui s'étend vers le haut à partir d'un plateau périphérique 12, qui peut être circulaire. Le col 11 peut être réalisé de manière classique avec un renfort annulaire périphérique qui fait saillie vers l'extérieur. Ce renfort annulaire sert traditionnellement à l'accrochage d'une bague de montage pour fixer l'organe de distribution d'un col du réservoir.

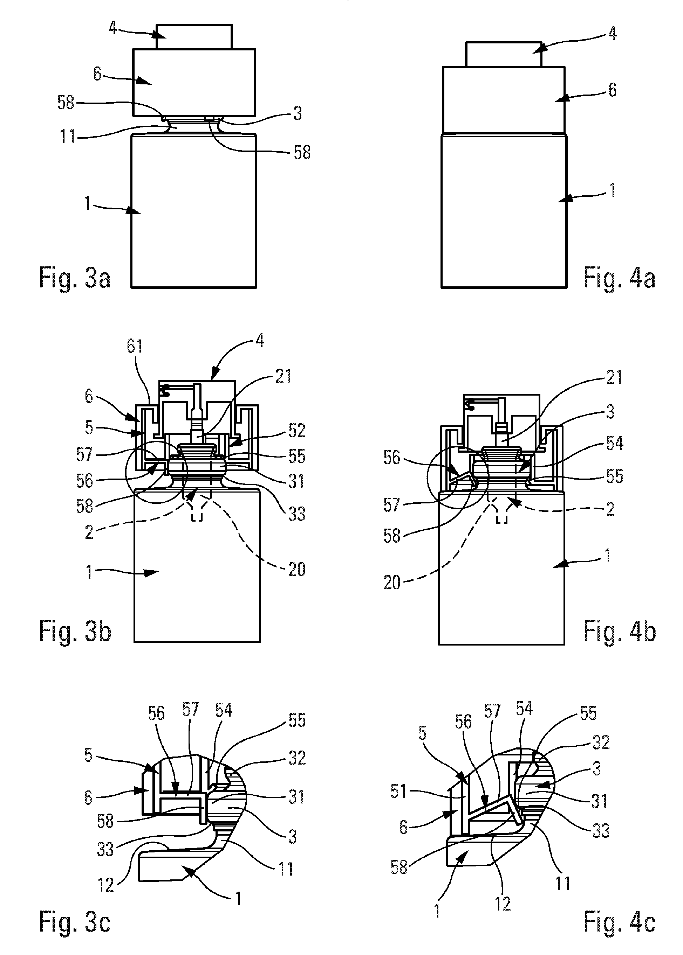

L'organe de distribution 2 peut être une pompe ou une valve comprenant une tige d'actionnement 21 déplaçable axialement en va-et-vient dans un corps 20, uniquement visible sur les figures 3b et 4b.

La bague de montage 3 a pour fonction de maintenir fermement, et avantageusement de manière définitive, l'organe de distribution 2 dans le col 11 du réservoir. Dans le mode de réalisation particulier illustré sur les figures, la bague de montage 3 est une bague à sertir qui est avantageusement réalisée en métal. La bague à sertir 3 comprend une partie supérieure 32 en prise autour du corps 20 de l'organe de distribution 2 et une partie inférieure 31 en prise autour du col, et plus particulièrement autour du renfort annulaire du col. Ainsi, la partie inférieure 31 forme un épaulement 33 orienté vers le bas. Il s'agit là d'une conception tout à fait classique pour une bague de montage à sertir. En variante, il est possible que la bague à sertir 3 ne comprenne pas de partie supérieure 32 enveloppant une partie du corps 20 de l'organe de distribution 2.

Le poussoir 4 vient en prise avec l'extrémité libre de la tige d'actionnement 21 de l'organe de distribution 2, et comprend en outre une surface d'appui 41 et un orifice de distribution 42. L'utilisateur peut ainsi appuyer à l'aide d'un ou de plusieurs doigt(s) sur la surface d'appui 41 de manière à enfoncer la tige d'actionnement 21 dans le corps 20 de l'organe de distribution. En réponse, du produit fluide, sous forme dosée ou non, est distribué à travers l'orifice de distribution 42. Il s'agit là encore d'une conception tout à fait classique pour un poussoir dans les domaines de la cosmétique, de la parfumerie ou de la pharmacie. On peut remarquer que le poussoir 4 forme une collerette 43 qui fait saillie radialement vers l'extérieur au niveau de son extrémité inférieure.

Certains distributeurs se limitent à un réservoir, un organe de distribution, une bague de montage et un poussoir. Cependant, il est souvent apprécié d'agrémenter le distributeur d'éléments esthétiques ou même fonctionnels. C'est le cas de l'organe de fixation 5 qui peut également être qualifié de frette d'habillage dans le présent mode de réalisation. L'organe de fixation 5 est associé à l'enveloppe d'habillage 6, et remplissent ensemble une fonction esthétique, mais également technique. L'enveloppe d'habillage 6 est destinée à venir en prise autour de l'organe de fixation 5, comme on peut le voir sur les figures 3b et 4b. L'enveloppe d'habillage 6 comprend un rabat rentrant 61 qui s'étend au-dessus de la collerette 43 du poussoir 4, de sorte que celui-ci est prisonnier de l'enveloppe d'habillage 6, et ne peut être retiré de la tige d'actionnement 21. Il s'agit là d'une caractéristique optionnelle : la collerette 43 pouvant être omise.

L'organe de fixation 5 sera maintenant décrit de manière plus détaillée en référence aux figures 2a et 2b. L'organe de fixation 5 comprend une douille externe 51 de forme générale sensiblement cylindrique circulaire présentant un diamètre légèrement inférieur à celui du réservoir 1. A l'intérieur de cette douille externe 51 sont formés des moyens d'accrochage 52 et des moyens de guidage 56.

Les moyens d'accrochage 52 sont engageables en prise avec et axialement autour du col 11, et plus particulièrement avec la bague de montage 3 jusqu'en position finale d'accrochage dans laquelle ils viennent en prise sous l'épaulement 33 formé par la bague de montage 3. La position finale d'accrochage est une position fixe et définitive. Plus en détail, les moyens d'accrochage 52 comprennent plusieurs segments d'accrochage qui s'étendent vers l'intérieur à partir de la douille externe 51. Chaque segment d'accrochage comprend un plateau radial 53 relié sur sa périphérie externe à l'intérieur de la douille externe 51 et prolongé sur sa périphérie interne par une jupe axiale 54 qui s'étend vers le haut. Les jupes axiales 54 forment ensemble un cylindre interrompu. Chaque segment comprend également un profil d'accrochage 55, qui peut par exemple se présenter sous la forme d'une lèvre inclinée orientée vers le haut au niveau de la jonction du plateau 53 avec la jupe 54.

Les moyens de guidage 56 comprennent plusieurs pattes de guidage déformables 56 qui s'étendent vers l'intérieur à partir de la douille externe 5. Chaque patte 56 comprend une lame radiale 57 dont une extrémité est reliée à la douille externe 51 et dont l'autre extrémité opposée se prolonge par une bride axiale 58 orientée vers le bas. Avantageusement, les lames radiales 57 sont flexibles ou souples, notamment au niveau de leur jonction avec la douille externe 51. Les pattes de guidage 56 sont engageables autour du col du réservoir, et plus particulièrement autour de la bague de montage 3. En d'autres termes, les pattes de guidage 56 peuvent coulisser, avec ou sans frottement, autour de la bague de montage 3.

En se référant aux figures 2a et 2b, on peut remarquer que les segments d'accrochage 52 occupent une étendue angulaire bien plus importante que les pattes de guidage 56. De ce fait, les segments d'accrochage 52 sont rigides, alors que les pattes de guidage 56 sont souples. Il faut également remarquer que les segments d'accrochage et les pattes de guidage sont disposés de manière alternée : deux segments sont séparés par une patte et deux pattes sont séparées par un segment. On peut également noter que les plateaux radiaux 53 s'étendent sensiblement dans le même plan que les lames radiales 57. De même, les jupes axiales 54 s'étendent sensiblement dans le même cylindre fictif que les brides axiales 58. En d'autres termes, les brides axiales 58 s'étendent dans le prolongement des jupes axiales, mais en sens opposé, étant donné que les jupes axiales s'étendent vers le haut, alors que les brides axiales s'étendent vers le bas. Avantageusement, on peut prévoir que les brides axiales 58 sont légèrement décalées vers l'extérieur par rapport aux jupes axiales 54. On peut également constater que les extrémités inférieures libres des brides axiales 58 font saillie vers le bas en dessous de l'extrémité inférieure de la douille externe 54, comme on peut le remarquer sur les figures 3a et 3b.

Dans le mode de réalisation utilisé pour illustrer la présente invention, l'organe de fixation 5 ne comprend qu'une douille externe 51, des moyens d'accrochage 52 et des moyens de guidage 56. Toutefois, sans sortir du cadre de l'invention, l'organe de fixation 5 pourrait également intégrer des moyens de réception pour l'organe de distribution 2. Dans ce cas, le distributeur ne comprendrait pas de bague de montage 3, les moyens d'accrochage viendraient directement en prise sous le renfort annulaire du col, et les moyens de guidage viendraient s'engager directement autour du col.

On se référera maintenant aux figures 3a à 4c pour décrire en détail une opération de montage d'un distributeur intégrant un organe de fixation selon l'invention. Sur les figures 3a et 3b, on peut constater que l'organe de distribution 2 est déjà monté dans le col du réservoir à l'aide de la bague de montage 3. Le poussoir a été prémonté dans l'ensemble formé par l'organe de fixation 5 et l'enveloppe d'habillage 6. L'organe de fixation 5 est engagé autour de la bague de montage 3 dans une position intermédiaire de montage. En effet, les moyens de guidage 56 sont engagés autour du col, alors que les moyens d'accrochage 52 sont encore disposés au-dessus du col. Plus précisément, on peut voir que les brides axiales 58 sont en prise autour de la partie inférieure 31 de la bague de montage 3 qui est sertie autour du renfort annulaire formé par le col 11. Grâce à l'invention, il est particulièrement aisé d'atteindre cette position intermédiaire de montage, étant donné que les brides axiales 58 font saillie vers le bas en dessous de la douille externe 51. Ceci est clairement visible sur la figure 3a. On peut également remarquer que le profil d'accrochage 55 vient alors simplement reposer sur la partie inférieure 31 de la bague de montage 3, comme on peut le voir sur la figure 3c. Il n'est pas nécessaire que les brides axiales 58 viennent en contact de frottement avec la bague de montage 3. Un jeu peut subsister entre les brides 58 et la partie inférieure 31. On peut remarquer sur la figure 3c que les pattes de guidage déformables ne sont pas déformées dans cette position intermédiaire de montage. L'organe de fixation 5 ne subit alors aucune contrainte de déformation. Toutefois, le pré-positionnement de l'organe de fixation 5 sur le col du réservoir permet le positionnement axial correct des moyens d'accrochage en vu de leur engagement autour du col. D'autre part, ce pré-positionnement permet de guider axialement le poussoir 4 de manière à faciliter son emmanchement sur la tige d'actionnement 21.

On comprend aisément qu'en exerçant une force axiale suffisante sur le rabat rentrant 61 de l'enveloppe d'habillage 6, l'organe de fixation 5 va se déplacer par rapport au col du réservoir de manière à atteindre la position finale d'accrochage représentée sur les figures 4a à 4c. La force axiale peut être exercée simultanément sur l'enveloppe 6 et sur le poussoir 4 pour engager ce dernier autour de la tige d'actionnement 21. Sur la figure 4a, on peut voir que la douille externe 51 et/ou l'enveloppe d'habillage 6 sont en contact avec le plateau 12 du réservoir 1 de manière à former une jonction intime. Intérieurement, on peut voir que les jupes axiales 54 sont maintenant positionnées autour de la partie inférieure 33 de la bague de montage 3 avec les profils d'accrochage 55 en prise sous l'épaulement 33. L'engagement des profils 55 sous l'épaulement 33 réalise un encliquetage ferme et définitif. Au niveau des moyens de guidage 56, on peut remarquer que les pattes de guidage élastiques ont été déformées, puisque les lames radiales 57 pointent maintenant vers le haut. La déformation a eu lieu au niveau des jonctions des lames avec la douille externe 51. La déformation a été engendrée par le contact appuyé des extrémités inférieures libres des brides axiales 58 avec le plateau 12 du réservoir. En effet, étant donné que les brides axiales 58 faisaient initialement saillie en dessous du bord inférieur de la douille 51, les pattes de guidage élastiques ont été contraintes de se déformer pour amener la douille externe 51 en contact du plateau 12. On peut dire que les moyens de guidage 56, une fois leur fonction de guidage remplie, se sont effacés au profit de moyens d'accrochage 52 pour les amener en position finale d'accrochage. On peut également dire que les pattes de guidage déformables 56 se sont escamotées à mesure que les segments d'accrochage 52 gagnent leur position finale d'accrochage. De cette manière, les moyens de guidage ne peuvent en aucun cas gêner les moyens d'accrochage.

Bien que les moyens d'accrochage viennent en contact avec la partie inférieure (31) de la bague de montage en prise autour du col, on peut considérer que les moyens d'accrochage viennent en contact avec le col. On peut d'ailleurs envisager de monter un organe fixation de l'invention directement sur un col de réservoir dépourvu de bague de montage : dans ce cas, les moyens d'accrochage viennent en contact direct avec le col. Dans tous les cas, les moyens de guidage ne servent pas de pièce intermédiaire pour la fixation des moyens d'accrochage sur le col en position finale d'accrochage. Les moyens de guidage ne sont pas disposés ou coincés entre les moyens d'accrochage et le col du réservoir en position finale d'accrochage: ils sont positionnés en dessous des moyens d'accrochage. Les moyens de guidage ne coopèrent pas avec les moyens d'accrochage en position finale d'accrochage.

Grâce à l'invention, il est possible de prémonter ou positionner très facilement un organe de fixation sur un col de réservoir en vue de son accrochage définitif. L'effacement ou escamotage des moyens de guidage en fin d'opération d'accrochage est une caractéristique avantageuse qui n'engendre aucune opération supplémentaire.

## Revendications

1. Organe de fixation (5) destiné à être engagé autour d'un col (11) d'un réservoir (1), l'organe de fixation (5) comprenant des moyens d'accrochage (52) engageables axialement en prise avec et autour du col (11) jusqu'en position finale d'accrochage dans laquelle l'organe (5) est fermement accroché autour du col (11), l'organe de fixation (5) comprenant en outre des moyens de guidage (56) engageables axialement autour du col (11) avant que les moyens d'accrochage (52) ne viennent en prise avec le col (11) pour faciliter le positionnement de l'organe de fixation (5) et des moyens d'accrochage (52) par rapport au col (11), **caractérisé en ce que** les moyens de guidage comprennent plusieurs pattes déformables (56) qui s'étendent librement radialement vers l'intérieur en direction du col (11).

2. Organe de fixation (5) selon la revendication 1, dans lequel les moyens de guidage (56) s'étendent axialement en dessous des moyens d'accrochage (52), notamment en position finale d'accrochage.

3. Organe de fixation (5) selon la revendication 1 ou 2, dans lequel les moyens de guidage (56) sont déformés en position finale d'accrochage contre le réservoir (1).

4. Organe de fixation (5) selon la revendication 1, 2 ou 3, dans lequel chaque patte (56) comprend une lame radiale (57) et une bride axiale (58) engageable autour du col (11).

5. Organe de fixation (5) selon l'une quelconque des revendications précédentes, dans lequel les moyens d'accrochage comprennent plusieurs segments d'accrochage rigides (52) engageables en prise avec et autour du col (11).

6. Organe de fixation (5) selon la revendication 5, dans lequel chaque segment d'accrochage (52) comprend un plateau radial (53) et une jupe axiale (54) engageable autour du col (11).

7. Organe de fixation (5) selon la revendication 5 ou 6, dans lequel au moins un des segments (52) est pourvu d'un profil d'accrochage (55) adapté à venir en prise sous un épaulement (33) formé autour du col (11).

8. Organe de fixation (5) selon l'une quelconque des revendications précédentes, dans lequel les moyens de guidage (56) et les moyens d'accrochage (52) sont disposés de manière alternée autour du col (11).

9. Organe de fixation (5) selon l'une quelconque des revendications précédentes, comprenant une douille externe (51), les moyens de guidage comprenant plusieurs pattes déformables (56) qui s'étendent librement à partir de la douille (51) radialement vers l'intérieur en direction du col (11), les moyens d'accrochage comprenant plusieurs segments d'accrochage rigides (52) qui s'étendent librement à partir de la douille (51) radialement vers l'intérieur en direction du col (11).

10. Distributeur de produit fluide comprenant :
- un réservoir de produit fluide (1) définissant un col (11),
- un organe de distribution (2), tel qu'une pompe ou une valve, monté dans le col (11) du réservoir (1), et
- un organe de fixation selon l'une quelconque des revendications précédentes engagé autour du col (11) du réservoir.

11. Distributeur selon la revendication 10, comprenant en outre une bague de montage (3) pour monter l'organe de distribution (2) dans le col, l'organe de fixation (5) venant en prise avec la bague de montage (3).

12. Distributeur selon la revendication 11, dans lequel la bague de montage (3) forme un épaulement de bague (33) sous lequel les moyens d'accrochage (52) sont logés, les moyens de guidage (56) étant déformés contre le réservoir (1) en position finale d'accrochage.

13. Distributeur selon la revendication 10, dans lequel l'organe de fixation vient directement en prise avec le col du réservoir, le col formant un épaulement de col sous lequel les moyens d'accrochage sont logés, les moyens de guidage (56) étant déformés contre le réservoir (1) en position finale d'accrochage.

## Patentansprüche

1. Befestigungseinrichtung (5), die dazu gedacht ist, um einen Kragen (11) eines Behälters (1) in Eingriff gebracht zu werden, wobei die Befestigungseinrichtung (5) Einrastmittel (52) umfasst, die axial mit dem und um den Kragen (11) bis zur endgültigen Einrastposition in Eingriff bringbar sind, in der die Einrichtung (5) fest um den Kragen (11) verrastet ist, wobei die Befestigungseinrichtung (5) des Weiteren Führungsmittel (56) umfasst, die axial um den Kragen (11) in Eingriff bringbar sind, bevor die Einrastmittel (52) mit dem Kragen (11) in Eingriff kommen, um die Positionierung der Befestigungseinrichtung (5) und der Einrastmittel (52) relativ zum Kragen (11) zu erleichtern, **dadurch gekennzeichnet, dass** die Führungsmittel mehrere verformbare Ansätze (56) umfassen, die sich frei radial zum Inneren hin in Richtung des Kragens (11) erstrecken.

2. Befestigungseinrichtung (5) nach Anspruch 1, wobei sich die Führungsmittel (56), insbesondere in der endgültigen Einrastposition, axial unterhalb der Einrastmittel (52) erstrecken.

3. Befestigungseinrichtung (5) nach Anspruch 1 oder 2, wobei die Führungsmittel (56) in der endgültigen Einrastposition gegen den Behälter (1) verformt sind.

4. Befestigungseinrichtung (5) nach Anspruch 1, 2 oder 3, wobei jeder Ansatz (56) eine radiale Lamelle (57) und einen axialen Flansch (58), um den Kragen (11) in Eingriff bringbar, umfasst.

5. Befestigungseinrichtung (5) nach einem der vorhergehenden Ansprüche, wobei die Einrastmittel mehrere starre Einrastsegmente (52) umfassen, die mit dem und um den Kragen (11) in Eingriff bringbar sind.

6. Befestigungseinrichtung (5) nach Anspruch 5, wobei jedes Einrastsegment (52) eine radiale Platte (53) und einen axialen Mantel (54), um den Kragen (11) in Eingriff bringbar, umfasst.

7. Befestigungseinrichtung (5) nach Anspruch 5 oder 6, wobei zumindest eines der Segmente (52) mit einem Einrastprofil (55) versehen ist, das dazu geeignet ist, unter einem um den Kragen (11) gebildeten Absatz (33) in Eingriff zu kommen.

8. Befestigungseinrichtung (5) nach einem der vorhergehenden Ansprüche, wobei die Führungsmittel (56) und die Einrastmittel (52) abwechselnd um den Kragen (11) angeordnet sind.

9. Befestigungseinrichtung (5) nach einem der vorhergehenden Ansprüche, umfassend eine externe Buchse (51), wobei die Führungsmittel mehrere verformbare Ansätze (56) umfassen, die sich frei von der Buchse (51) radial nach Innen in Richtung des Kragens (11) erstrecken, wobei die Einrastmittel mehrere starre Einrastsegmente (52) umfassen, die sich frei von der Buchse (51) radial zum Inneren in Richtung des Kragens (11) erstrecken.

10. Spender für ein fluides Produkt, umfassend:
- einen Behälter (1) für ein fluides Produkt, der einen Kragen (11) definiert,
- eine Ausgabeeinrichtung (2), wie eine Pumpe oder ein Ventil, die auf dem Kragen (11) des Behälters (1) montiert ist, und
- eine Befestigungseinrichtung nach einem der vorhergehenden Ansprüche, die um den Kragen (11) des Behälters in Eingriff ist.

11. Spender nach Anspruch 10, des Weiteren umfassend einen Montagering (3) zur Montage der Ausgabeeinrichtung (2) in dem Kragen, wobei die Befestigungseinrichtung (5) mit dem Montagering (3) in Eingriff kommt.

12. Spender nach Anspruch 11, wobei der Montagering (3) einen Ringabsatz (33) bildet, unter welchem die Einrastmittel (52) untergebracht sind, wobei die Führungsmittel (56) in der endgültigen Einrastposition gegen den Behälter (1) verformt sind.

13. Spender nach Anspruch 10, wobei die Befestigungseinrichtung direkt mit dem Kragen des Behälters in Eingriff kommt, wobei der Kragen einen Kragenabsatz bildet, unter dem die Einrastmittel untergebracht sind, wobei die Führungsmittel (56) in der endgültigen Einrastposition gegen den Behälter (1) verformt sind.

## Claims

1. A fastener member (5) for engaging around a neck (11) of a reservoir (1), the fastener member (5) including fastener means (52) that are axially engageable with and around the neck (11) until a final fastened position is reached in which the member (5) is fastened firmly around the neck (11), the fastener member (5) further including guide means (56) that are axially engageable around the neck (11) before the fastener means (52) come into engagement with the neck (11), so as to make it easier to position the fastener member (5) and the fastener means (52) relative to the neck (11), the fastener member being **characterized in that** the guide means comprise a plurality of deformable tabs (56) that freely extend radially inwards towards the neck (11).

2. A fastener ring (5) according to claim 1, wherein the guide means (56) axially extend below the fastener means (52), in particular in the final fastened position.

3. A fastener ring (5) according to claim 1 or claim 2, wherein the guide means (56) are deformed against the reservoir (1) in the final fastened position.

4. A fastener ring (5) according to claim 1, 2, or 3, wherein each tab (56) comprises a radial blade (57) and an axial flange (58) that is engageable around the neck (11).

5. A fastener member (5) according to any preceding claim, wherein the fastener means comprise a plurality of rigid fastener segments (52) that are engageable with and around the neck (11).

6. A fastener ring (5) according to claim 5, wherein each fastener segment (52) comprises a radial plate (53) and an axial skirt (54) engageable around the neck (11).

7. A fastener ring (5) according to claim 5 or claim 6, wherein at least one of the segments (52) is provided with a fastener profile (55) that is adapted to come into engagement below a shoulder (33) that is formed around the neck (11).

8. A fastener member (5) according to any preceding claim, wherein the guide means (56) and the fastener means (52) are arranged in alternating manner around the neck (11).

9. A fastener member (5) according to any preceding claim, including an outer bushing (51), the guide means comprising a plurality of deformable tabs (56) that freely extend radially inwards from the bushing (51) towards the neck (11), the fastener means comprising a plurality of rigid fastener segments (52) that freely extend radially inwards from the bushing (51) towards the neck (11).

10. A fluid dispenser comprising:
• a fluid reservoir (1) defining a neck (11);
• a dispenser member (2), such as a pump or a valve, mounted in the neck (11) of the reservoir (1); and
• a fastener member according to any preceding claim, engaged around the neck (11) of the reservoir.

11. A dispenser according to claim 10, further comprising a mounting ring (3) for mounting the dispenser member (2) in the neck, the fastener member (5) coming into engagement with the mounting ring (3).

12. A dispenser according to claim 11, wherein the mounting ring (3) forms a ring shoulder (33) below which the fastener means (52) are housed, the guide means (56) being deformed against the reservoir (1) in the final fastened position.

13. A dispenser according to claim 10, wherein the fastener member comes directly into engagement with the neck of the reservoir, the neck forming a neck shoulder below which the fastener means are housed, the guide means (56) being deformed against the reservoir (1) in the final fastened position.
